# EUROPEAN PATENT SPECIFICATION

(11) **EP 2 746 412 B1**
(45) Date of publication and mention of the grant of the patent: **21.10.2015**
(21) Application number: 12382519.2
(22) Date of filing: 20.12.2012
(51) Int. Cl.: C22B 1/00, C22B 7/00

(54) **Recycling process for recycling granulated metallic materials containing surface impurities**
Wiederverwertungsverfahren zur Wiederverwertung granulierter metallischer Materialien mit Oberflächenverunreinigungen
Procédé de recyclage pour recycler des matériaux métalliques granulés contenant des impuretés de surface

(43) Date of publication of application: 25.06.2014
(73) Proprietor: Fundacion Tecnalia Research & Innovation, 48160 Derio (Vizcaya) (ES)
(72) Inventor: Vicario Gómez, Iban, 48160 Derio (Bizkaia) (ES); Múgica Iraola, Juan Carlos, 48160 Derio (Bizkaia) (ES); Yurramendi Sarasola, Lourdes, 48160 Derio (Bizkaia) (ES); Antoñanzas Gonzalez, Javier, 48160 Derio (Bizkaia) (ES); Abuin Ariceta, Alberto, 48160 Derio (Bizkaia) (ES)
(74) Representative: Carpintero Lopez, Francisco

(56) References cited:
- EP-A2- 0 863 216
- WO-A1-98/53108
- WO-A2-2008/083449
- US-A- 5 405 428

## Description

### Technical Field of the Invention

The present invention relates to a metal preparation and recycling process having application in the metallurgical industry and more specifically in the field of metal recovery for recovering metals contained in waste materials, particularly when they have a small particle size. These waste materials are **characterized in that** the metal is contaminated with organic material such as oil, plastic, wood, paint, etc., and they can also contain inorganic impurities.

The object of the invention is a process which allows removing the non-metallic components, mainly organic products and various impurities, from waste materials with a high metallic content. Even though the process is applicable to metallic materials of various granulometries and sizes, it is particularly suitable for small metallic particles that are non-recoverable or recoverable with a low yield and/or quality by means of the processes known today. The process is suitable for a large number of metals which include aluminium, copper, magnesium, zinc, etc. and their alloys.

### Background of the Invention

Current thermal processes for treating metals contaminated with impurities, particularly organic impurities, have the following problems:
- The metal is oxidized as the temperature increases and as it contacts the organic elements during the recycling process. This prevents these elements from hot sintering and briquetting, i.e., forming briquettes. Furthermore, gases are generated during the process, there is a risk of explosion due to moisture and the metallurgical yields are low.
- The obtained quality of the materials recycled from dirty raw materials does not allow the use thereof in applications requiring high metal purity and low metal oxidation (alloying tablets, aluminium shot, cathode copper, etc.).
- The loads contained in the paints which usually adhere to the metal are inadequately removed.
- It can be necessary to supply molten salts to achieve a greater degree of recovery. These salts generate slags that are difficult to recycle and have a high cost and environmental impact.
- It is very difficult to recycle sandwich type composite elements, panels, etc.,

Due to these problems, there are streams of metallic materials which cannot be recovered with the existing processes. In other cases in which the recovery is possible, the metallurgical yields are low and/or the recycled metals cannot be used for applications with high purity requirements due to the contamination suffered by the metal during the recycling process.

Among the methods which have been suggested for metal recovery are those based on burning or combusting the organic fraction such as plastics, rubbers, resins or paper found with the metal. Said methods require an oxidizing atmosphere and are usually performed at relatively high temperatures. As a result, a part of the metal is oxidized with the subsequent loss of recovery yield.

The fact that the metallic materials are exposed to relatively high temperatures in the presence of oxygen is questionable for at least two reasons, first, because the metal is oxidized on the surface and second, because the properties of the metal recovered at the end are usually affected by overheating. Therefore, it does not have properties as good as those of the metal before being processed for removing the contaminating elements.

Patent US-7,976,611 describes a continuous process for recovering metals in which the organic components are removed by means of direct combustion at high temperatures. The indicated process temperatures are between 400 and 1100°C, preferably from 600 to 900°C and specifying the maximum preferred temperature in the range of 700-850°C. The addition of oxygen at these temperatures allows removing the organic part by means of oxidation but it has several drawbacks. First, the treatment temperature is too high for a large number of metals, including Al, Mg, Pb, since they have lower melting temperatures. Second, as has already been mentioned above, the direct organic matter combustion processes generate metal corrosion causing a lower recovery yield. In the case of the mentioned patent, this phenomenon is particularly relevant since the metal is treated at a high temperature in oxidizing medium. Third, the suggested process causes the volatilization of specific metals which must be retained in the treatment line for treating gases in the form of oxides, generating a new waste and reducing the metal recovery yield.

Patent GB-1,370,071 uses an inclined rotary furnace for recovering chips with adhered organic materials by means of a process which includes moving the chips through a tortuous path with an ascending temperature gradient in an atmosphere with the presence of oxygen. It indicates that the treatment temperature must be sufficient so that it vaporizes or oxidizes the organic contaminants but less than that at which the metal is substantially oxidized. However, the necessary temperature which is furthermore different for each treated metal is not specified. Only the specific temperature for bronze treatment is indicated which at most must be 200°F lower than the melting temperature. Applied to a good number of metals, this temperature margin generates the above mentioned problems: significant metal oxidation and a high metal volatilization towards the gas outlet. This last phenomenon mainly arises when mixtures of metals with the presence of readily volatilizable metals are treated. After the impurity removal process, the invention applies a chip compaction system at the output temperature or after a partial cooling, followed optionally by melting the compacted metal in a melting furnace. The chips are compacted at a high temperature but 500°F lower than the melting temperature of the treated metal. In other words, the compaction temperature is much lower than the semi-solid temperature and therefore does not assure that the metal is in a soft enough state so as to allow an optimum metal compaction. On the other hand, this patent is not suitable for working with materials which are large in size and with small concentrations of organic loads.

Other methods for recovering contaminated metals include heating the metal and the accompanying impurities in a leak-tight chamber and in an oxygen-free environment to cause the pyrolysis of organic compounds. This method generally requires treating small batches of product, increasing the cost in relation to a continuous process. Furthermore, the pyrolysis of organic compounds generates a large variety of subproducts which complicate the management thereof. On one hand, there are pyrolytic condensates and gases, mixtures of a large number of organic products, that require recollection and treatment and, on the other, a large amount of carbonaceous waste which is adhered to the metal.

Patent US 3,744,779 presents a continuous process for recovering scrap metals by means of "destructive distillation" of the organic components at temperatures where the metal is relatively unaffected, with heating in the absence of oxygen. The process actually consists of two well differentiated subprocesses. First, the metallic waste is heated in the absence of oxygen, a distillate of volatile organic compounds being produced. When the temperature is high enough and the heavy organic compounds which are still together with the metal are pyrolyzed generating complex mixtures of pyrolytic liquids and gases. The management of the gases released from both subprocesses is very complex: the volatile compounds directly volatized from the waste which will be mixed subsequently with the condensable products generated in the pyrolysis step must first be condensed. Finally, incondensable pyrolytic gases which must be continuously removed will be generated at the outlet of the furnace. It is a process that is well adapted to metallic waste contaminated only with volatile organic products, even allowing their recovery, however, it has the complexity typical of pyrolytic processes when it comes to waste with complex mixtures of organic products, particularly when non-volatile, high molecular weight products are present. Furthermore, this process has the disadvantage that the final metal must be processed by means of physical separation once obtained and a salt bath is used for cleaning the metal from carbonaceous waste. The use of salts has a great environmental impact due to the creation of slags that are difficult to recover. On the other hand, it is necessary to melt the recovered metal for obtaining a suitable cleaning.

### Description of the Invention

The present invention overcomes the problems mentioned in the processes described above and relates to a recycling process for recycling metals from waste materials which consists of three subprocesses. In the first subprocess, the organic fraction is oxidized in an oxidizing atmosphere at a low temperature preventing metal oxidation. In the second subprocess, the impurity residue is removed at a higher temperature and in an inert atmosphere, removing the non-metallic components adhered to the metal. The process is preferably implemented continuously by means of the two mentioned heat treatments, resulting finally in a clean metal. This metal can be suitable for direct use or for use after being subjected to a third subprocess of sintering at a temperature very close to the melting temperature of the metal. The process further allows treating metals contaminated, for example, with oils or lacquers preventing the use of other processes requiring the addition of salts to separate the metal from its slag. It must be highlighted that one of the advantages of the process is that it is implemented continuously.

The recycling process for recycling metallic waste is particularly suitable when the metal is preferably in the form of granules having a reduced size and accompanied by non-metallic components, particularly organic products. The first phase of the process allows, by means of two consecutive subprocesses 1 and 2, removing all those organic materials, such as the coolants, foams, plastics, woods, etc., associated with the metal and reducing the percentage of contaminants in the recycled metal, such as the paint loads, without causing the oxidation thereof. Therefore, the process allows, in this first phase, obtaining the clean metal which be can be used directly as a secondary raw material in different industrial applications both in the form of shot or briquettes. In a second phase, the application of subprocess 3 which allows compacting the metal at a temperature very close to but less than its melting point is contemplated if the final use so requires, obtaining a final quality similar to the molten metal.

Therefore, the overall process proposed by the invention comprises combining three subprocesses: the objective of the first two subprocesses is to remove the impurities accompanying the metallic waste, while the objective of the third subprocess is to compact the metal by means of a sintering treatment.

In subprocess 1, most the contaminating material particularly the organic fraction is removed. The material is first heated to a temperature less than 300°C in an oxidizing atmosphere. The reactor or furnace where the treatment is performed is provided with a system keeping the material in motion, which can be made by means of systems such as vibrating trays, rotation, etc.

On the other hand, in subprocess 2 the material resulting from the preceding subprocess is heated to 400-550°C in an inert atmosphere to prevent oxidation. In this subprocess which is also in motion, the remaining residues of contaminating material, for example, cinder and other impurities are removed. The inorganic components adhered to the metallic surface are then separated by means of the combined action of temperature and mechanical treatment (friction, dilation, etc.). These inorganic components may originate from the original waste (ceramic materials, paint loads, etc.) or may have been generated in the preceding subprocess as a result of the incomplete combustion of the organic products (cinder).

Said combination of two subprocesses of heating, one with an oxidizing atmosphere and the other with an inert atmosphere, both with ranges of controlled temperature, allows obtaining a non-oxidized metal free of original impurities and without geometric shape alteration in a novel and efficient manner. This clean metal could already be used in different industrial applications as a secondary raw material.

Nevertheless, it often happens that the granulated metals cannot be recycled and reused in any industrial application. The reason for this impossibility or difficulty usually resides in the fact that the small metals are easily oxidized as the temperature increases in an environment with the presence of oxygen. Therefore, even though the material resulting from the two first subprocesses can be reused directly on certain occasions, the process of the present invention contemplates a third subprocess which allows transforming the granulated metal into a material similar to molten metal, the latter being suitable for use in most industrial processes, particularly in those requiring the melting thereof by means of conventional systems. The decontaminated granulated metal originating from subprocess 2 is subjected to a sintering process, for which it must be heated to a temperature in which it adopts a semi-solid state, i.e., a pasty consistency, said temperature depending on each metal, for being subsequently pressed into the form of briquettes or the like. This subprocess 3 thus completes the overall recycling process for recycling original metallic waste, when required.

### Description of the Drawings

To complement the description that is being made and for the purpose of aiding to better understanding the features of the invention according to a preferred practical embodiment thereof, a drawing is attached as an integral part of said description in which the following has been depicted with an illustrative and non-limiting character:

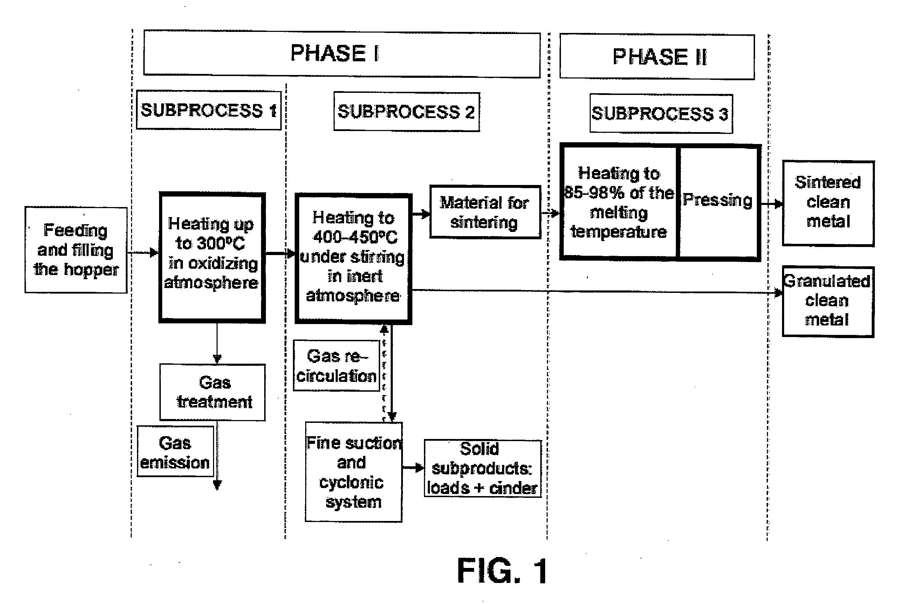

Figure 1 shows a flow chart of a preferred embodiment of the process of the invention where the subprocesses 1, 2 and 3 can be distinguished.

### Preferred Embodiment of the Invention

The process consists of three subprocesses which can be classified into two phases:
Phase 1: The objective of subprocesses 1 and 2 is to remove impurities, particularly organic impurities (oils, plastics, etc.), by means of two consecutive treatments, one in oxidizing medium and a low temperature and the second in an inert medium at a higher temperature. The result is a clean metal which can be marketed or molten directly or can be sintered in the following phase.
Phase 2: On the other hand, when the application of the recycled material so requires, subprocess 3 receives the metallic material, particularly small metallic material, already free of impurities generated in subprocesses 1 and 2 for being sintered by means of pressing at a temperature less than the melting temperature.

Each of the subprocesses is detailed below according to a preferred embodiment of the process of the invention:
In subprocess 1, the metallic material with impurities is introduced to remove moisture and organic compounds by means of oxidation at a temperature of approximately 300°C. The objective is to remove most of said compounds in the form of gas preventing metal oxidation. Oxygen or air must be introduced together with the material to be treated in a stoichiometric amount enough for oxidizing all the organic matter present. The equipment in which this step is performed must be provided with a system causing the movement of the material, both for its forward movement and for allowing a homogenous heating and the exposure of the entire organic fraction to the oxidizing gas. The heating can be performed both by means of a direct heating (e.g.: burner or resistances located inside the equipment) or through an outer sleeve provided with a heating system (e.g.: resistances, burners, hot air, etc., located in the sleeve). The equipment further requires a control regulating the temperature to which the material is subjected. If the treated material contains an organic fraction the combustion of which does not allow reaching the process temperature, the heating system must provide the necessary additional heat. If there is an abundance of organic fraction and its combustion raises the temperature above 300°C, the system must be controlled by means of various practices: diluting the metallic material to be treated with an inert material (minerals, another metal, etc.) which absorbs heat and is easily recoverable and/or supplying a gas less rich in oxygen and/or cooling by means of a fluid circulating through the outer sleeve. The gases generated at that temperature can be duly treated before emission to the atmosphere. The equipment required for said treatment depends on the specific material which is being treated and on the level of impurities that it contains, however, at most the following equipment is required: postcombustor, gas cooler and bag filter.

In subprocess 2, the material treated in subprocess 1 is subjected, without it cooling down, to a temperature in the range of 400-450°C to finish removing the impurities. Since it is a temperature at which the metal can oxidize, this step is performed in an inert medium free of oxygen. It has been verified that cinder buildups and other impurities still present at the end of the previous treatment are thus removed. In this step, the equipment used must also be provided preferably with a system for moving the material since this movement together with the temperature produce a combined effect (dilation, friction, etc.) which allows obtaining a clean metallic material. The inert gas can be extracted from the equipment, purified by means of particle removal in a cyclone and/or bag filter and recirculated again to the inside. Like the preceding case, the heating system can be a direct heating system or an indirect heating system through a sleeve, with the exception of the direct systems which can introduce oxygen in the medium (e.g.: burners with flame). The resulting metallic material can be marketed or molten directly or can proceed to the following subprocess 3 for being sintered. In the case of non-compacted clean metal, a rapid cooling system can be necessary to prevent oxidation. To that end, vibrating cooling trays, water cubes, cryogenic systems, or any other metal cooling means can be used, being able to include the need of an inert atmosphere.

In subprocess 3, the clean granular material generated in the preceding phase can be compacted by means of sintering under pressure. To that end, the temperature of the material must be raised to 85-97% of the melting temperature of the metal treated in an inert medium and it must then be subjected to compaction by means of a press. The material obtained in these conditions has a density close to 100% of that corresponding to molten metal. Subprocess 3 is formed by a metering system for metering the hot metal, preferably at the same output temperature as subprocess 2 and by means of a system which allows an accurate metering (alveolar valves, chambers with a weighing and opening system depending on the weight detected), a system which allows raising the temperature to 85-97% of the melting temperature, such that the material is within the range of semi-solid state with a minimum liquid fraction allowing the optimum attachment of the materials in the compacting process and heated mold on which the material falls in order to be compacted by means of a press provided with one or two pistons, for example. When the material cools down, a cooling system can be necessary in some cases to enable reducing the cycle times, the piston is removed, the mold is opened and the compacted metal is extracted.

In view of this description and of Figure 1, the preferred embodiments described can be transformed into other similar embodiments by means of combining the phases and subprocesses described within the object of the invention. The invention has been described according to several preferred embodiments thereof, however, several variations can be introduced in said preferred embodiments without exceeding the object of the claimed invention.

### Example:

Two experimental examples representative of the application of the process object of the invention are shown below:
Example 1.- The process began with waste consisting of an aluminium shot contaminated with various organic materials. The fraction less than 1 mm contained 11.45% of total carbon, whereas the fraction between 1-2 mm contained 9.77%. The original material has been subjected to the subprocesses of phase I described above. Specifically, it has been subjected, in subprocess 1, to a temperature of 295°C for half an hour, 120% of oxygen stoichiometrically necessary for gasifying all the carbon having been circulated. It has been subjected subsequently, in subprocess 2, to a temperature of 430°C for half an hour in an inert argon atmosphere. The resulting material obtained has been classified into two fractions: less than 1 mm and 1-2 mm. The carbon content of the first fraction has been reduced to 0.18% and the carbon content of the second fraction to 0.13%. The effectiveness of the process described can thus be observed, the carbon removal performance being greater than 98% in both cases. On the other hand, the oxygen analyzed in the metal before the treatment was 1.4% and the oxygen obtained after the treatment in subprocesses 1 and 2 was 0.3%. In other words, it can be observed that the process has not caused material oxidation and has allowed, in contrast, removing a part of the surface oxide present in the starting material.
Example 2.- The waste subjected to treatment is a bundle of copper wires 20 cm in length and 0.5 mm in diameter contaminated with a mixture of oily products. The carbon content of the original material was 12%. This material has been subjected to the subprocesses of phase I described above. Specifically, it has been subjected, in subprocess 1, to a temperature of 300°C for 45 minutes, 120% of oxygen stoichiometrically necessary for gasifying all the carbon having been circulated. It has been subjected subsequently, in subprocess 2, to a temperature of 430°C for 45 minutes in an inert argon atmosphere. The carbon content of the resulting fraction is 0.2 %, the carbon removal performance being greater than 98%. The oxygen content remained invariable after the treatment steps.

## Claims

1. Recycling process for recycling granulated metallic materials containing surface impurities, **characterized in that** it combines a subprocess 1 and a subprocess 2, where the contaminating material is partially removed in subprocess 1 by means of heating the starting material to a temperature less than or equal to 300°C in a controlled oxidizing atmosphere; and the material is heated to 400-550°C in an inert atmosphere in subprocess 2 and the remaining residues of contaminating material are removed by a combined thermal-mechanical action.

2. Process according to claim 1, wherein the material is kept in motion during subprocesses 1 and 2.

3. Process according to claims 1 and 2, wherein the material coming from subprocess 2 is a granulated clean metal suitable for being used as a secondary raw material in various industrial applications.

4. Process according to any of the preceding claims, wherein the process is completed by subjecting the decontaminated granulated metal originating from subprocess 2 to a sintering process, for which it must be heated to a temperature less than its melting point, wherein it adopts a semi-solid state for being pressed subsequently into the form of briquettes or the like, said sintering process taking place in a subprocess 3.

## Patentansprüche

1. Wiederverwertungsverfahren zum Recyceln von granuliertem, metallischem Material, das Oberflächenverunreinigungen aufweist, **dadurch gekennzeichnet, dass** ein Teilverfahren 1 und ein Teilverfahren 2 kombiniert werden, wobei die Verunreinigungen teilweise im Teilverfahren 1 dadurch entfernt werden, dass das Ausgangsmaterial in einer kontrolliert oxidierenden Atmosphäre auf eine Temperatur von bis zu 300 °C oder weniger erhitzt wird; und dass das Material im Teilverfahren 2 in einer inerten Atmosphäre auf eine Temperatur zwischen 400 °C bis 500 °C erhitzt wird und die verbleibenden Überreste der Verunreinigung mittels eines kombinierten thermisch-mechanischen Verfahrens beseitigt werden.

2. Verfahren nach Anspruch 1, wobei das Material während der Teilverfahren 1 und 2 in Bewegung gehalten wird.

3. Verfahren nach einem der Ansprüche 1 und 2, wobei das durch das Teilverfahren 2 erhaltende Material ein granuliertes sauberes Metall ist, das zum Einsatz als Sekundärrohstoff in verschiedenen industriellen Anwendungen geeignet ist.

4. Verfahren nach einem der vorherigen Ansprüche, wobei das Verfahren dadurch abgeschlossen wird, dass das aus dem Teilverfahren 2 erhaltene dekontaminierte granulierte Metall gesintert wird, wofür es auf eine Temperatur unterhalb des Schmelzpunktes erhitzt werden muss und so eine halbfeste Konsistenz annimmt, um anschließend in brikettartige oder ähnliche Formen gepresst zu werden, wobei das Sintern einem Teilverfahren 3 entspricht.

## Revendications

1. Procédé de recyclage pour recycler des matériaux métalliques granulés contenant des impuretés de surface, **caractérisé en ce qu'**il combine un sous-procédé 1 et un sous-procédé 2, où le matériau contaminant est partiellement éliminé dans le sous-procédé 1 grâce au chauffage du matériau de départ jusqu'à une température inférieure ou égale à 300 °C dans une atmosphère oxydante contrôlée ; et le matériau est chauffé jusqu'à 400 à 550 °C dans une atmosphère inerte dans le sous-procédé 2, et les résidus restants de matériau contaminant sont éliminés par une action thermique-mécanique combinée.

2. Procédé selon la revendication 1, dans lequel le matériau est maintenu en mouvement pendant les sous-procédés 1 et 2.

3. Procédé selon les revendications 1 et 2, dans lequel le matériau provenant du sous-procédé 2 est un métal propre granulé approprié pour être utilisé en tant que matière première secondaire dans diverses applications industrielles.

4. Procédé selon l'une quelconque des revendications précédentes, dans lequel le procédé est achevé en soumettant le métal granulé décontaminé provenant du sous-procédé 2 à un procédé de frittage, pour lequel il doit être chauffé jusqu'à une température inférieure à son point de fusion, dans lequel il adopte un état semi-solide pour être pressé ensuite sous la forme de briquettes ou similaires, ledit procédé de frittage ayant lieu lors d'un sous-procédé 3.
